Europäisches Patentamt

European Patent Office

Office européen des brevets

(19)

(11) Veröffentlichungsnummer : **0 144 708**
**B1**

# (12) EUROPÄISCHE PATENTSCHRIFT

(45) Veröffentlichungstag der Patentschrift :
07.09.88

(21) Anmeldenummer : 84113050.3

(22) Anmeldetag : 30.10.84

(51) Int. Cl.⁴ : **G 01 P 13/04**

(54) Impulsgenerator.

(30) Priorität : 11.11.83 DE 3340843

(43) Veröffentlichungstag der Anmeldung :
19.06.85 Patentblatt 85/25

(45) Bekanntmachung des Hinweises auf die Patenterteilung : 07.09.88 Patentblatt 88/36

(84) Benannte Vertragsstaaten :
AT CH DE FR GB IT LI

(56) Entgegenhaltungen :
CH-A-   356 046
DE-A- 3.136 598
GB-A-      3 878
GB-A-   198 483

(73) Patentinhaber : ALCATEL N.V.
Strawinskylaan 537 (World Trade Center)
NL-1077 XX Amsterdam (NL)
CH FR GB IT LI AT
Standard Elektrik Lorenz Aktiengesellschaft
Hellmuth-Hirth-Strasse 42
D-7000 Stuttgart 40 (DE)
DE

(72) Erfinder : Oesterle, Hermann Friedrich
Hans-Sachs-Strasse 30
D-8560 Lauf (DE)
Erfinder : Rösl, Wolfgang
Fasanenweg 42
D-8501 Eckental (DE)
Erfinder : Rose, Jochen
Andreas-Maussner-Strasse 61
D-8505 Röthenbach (DE)

(74) Vertreter : Hösch, Günther, Dipl.-Ing. et al
Standard Elektrik Lorenz AG Patent- und Lizenzwesen Postfach 30 09 29
D-7000 Stuttgart 30 (DE)

## Beschreibung

Die vorliegende Erfindung bezieht sich auf einen Impulsgenerator gemäß dem Oberbegriff des Anspruchs 1.

Ein derartiger Impulsgenerator ist bekannt aus der CH-A 356 046. Dort ist in der mit einer Pumpe gekoppelten Drehwelle ein Sackloch vorgesehen, das durch eine mit einer Gewindebohrung versehenen Gewindemuffe verschlossen ist. In der Gewindebohrung ist ein in das Sackloch ragender, mit einem Gewinde versehener Stab entsprechend der Gewindesteigung verdrehbar und zugleich axial verschiebbar gelagert. Auf dem nach außen ragenden Ende des Stabes sind zwei Massekugeln an federnden Stegen angeordnet. Zwischen den Massekugeln befindet sich ein Kontaktpaar, das durch Druck der Massekugeln über Isolierteile an federnden Stegen in Ruhelage der Drehwelle geschlossen ist. Bei Drehung der Drehwelle werden die Massekugeln durch die auftretende Zentrifugalkraft nach außen ausgelenkt, so daß das Kontaktpaar öffnen kann. Je nach Drehrichtung verharrt der Stab in der genannten Lage oder er wird durch Masseträgheit der Massekugeln axial verschoben. In letzterer Stellung können die Massekugeln zwei Kontakte berühren und diese pro Umdrehung zweimal überbrücken.

Aus der DE-A 3 136 598 ist ein Impulsgenerator bekannt, bei dem ein Kontaktsatz aus zwei Kontaktpaaren besteht, die an parallel zueinander verlaufenden Blattfedern angeordnet sind. Dabei sind die beweglichen Kontakte an einer mittleren Blattfedern angeordnet, die an ihrem überstehenden Ende mit einem dort angebrachten runden Endstück in eine Zahnung eines Stirnzahnrads eingreift. Durch Drehen des Stirnzahnrads wird je nach Drehrichtung die Blattfeder nach der einen oder anderen Seite gegen einen für die jeweilige Drehrichtung und die Impulsabgabe vorgesehenen Kontakt geschwenkt. Beim Weiterdrehen springt schließlich das Endstück in die nächste Zahnlücke zurück, so daß der Kontakt geöffnet wird. Hierdurch ist die Drehrichtung genau definiert, da jeder Kontakt nur einer Drehrichtung zugeordnet ist. Diese Anordnung erfordert eine gestreckte Bauweise, da die mittlere Blattfeder immer radial zum Zahnrad verlaufen muß.

Weiterhin ist aus der GB-A 198 483 eine Steuervorrichtung bekannt, bei der ein drehbares und axial verschiebbares Zahnrad mit Schrägverzahnung versehen ist. Beim Antrieb desselben über ein zweites Zahnrad mit Schrägverzahnung, dessen Drehachse senkrecht zu derjenigen des ersteren steht, wird das erstere Zahnrad gedreht und axial verschoben. In den beiden axialen Endstellungen kann je ein Kontakt betätigt werden. Außerdem wird je ein seitlicher Kontakt bei Drehung einmal pro Umdrehung geschlossen.

Schließlich ist aus der GB-A 3 878 eine Steuervorrichtung bekannt, bei der ein Steuerrad mit zwei seitlichen Nuten vorgesehen ist und der dazwischen bestehende Steg ist durch eine die beiden seitlichen Nuten verbindende schräg verlaufende Quernut unterbrochen. Ein Tastfinger ist durch eine Feder so lagefixiert, daß er in Ruhelage in der Mitte der Quernut steht. Je nach Drehung des Steuerrades wird der Tastfinger in die eine oder andere seitliche Nut verschoben und er kann dort pro Umdrehung des Steuerrades einmal einen Kontakt schließen.

Mit der vorliegenden Erfindung soll die Aufgabe gelöst werden, einen Impulsgenerator der eingangs genannten Art so auszubilden, daß er kompakt und preisgünstig herstellbar ist und eine Erkennung der Drehrichtung und eine große Anzahl von Impulsen pro Umdrehung in einfacher Weise erreichbar ist.

Gelöst wird diese Aufgabe durch die im Kennzeichen des Anspruchs 1 angegebenen Merkmale. Hierdurch kann über die Axialverschiebung der Zahnscheibe die Drehrichtung festgestellt und durch Drehen der Zahnscheibe können die Impulse ausgegeben werden. Auf diese Weise ist nur ein Impulskontakt erforderlich, der normalerweise für eine sehr hohe Schaltzahl ausgelegt sein muß, wogegen der Drehrichtungskontakt je nach Wahl der Folgeschaltung und der Anordnung derselben unter Umständen wesentlich weniger Schaltungen aushalten muß, da er eventuell entweder nur ein- oder nur ausgeschaltet wird, um die Drehrichtung erkennen zu künnen.

Weitere vorteilhafte Einzelheiten der Erfindung sind in den Unteransprüchen angegeben und nachfolgend anhand eines in der Zeichnung dargestellten Ausführungsbeispieles der Erfindung beschrieben. Dabei zeigen :

Fig. 1 das Erfindungsprinzip anhand einer schematischen dargestellten Impulsgenerator-Anordnung von der Seite im Schnitt und

Fig. 2 das Prinzip der Zahnscheibenverschiebung mittels eines mehrgängigen Gewindes.

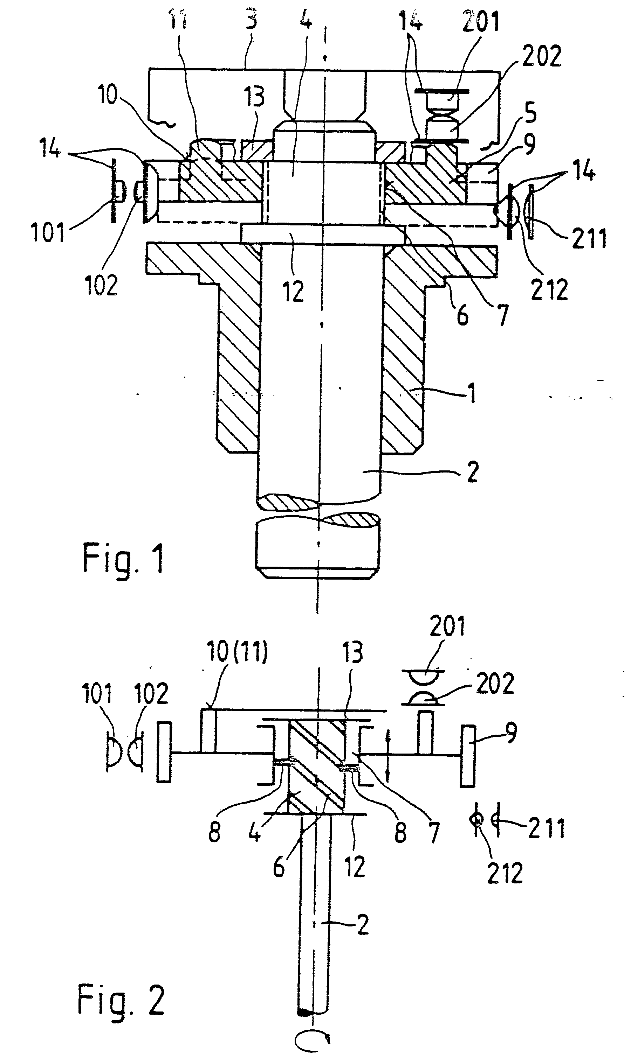

Mit 1 ist eine Lagerbuchse für eine Drehwelle 2 bezeichnet. Die Lagerbuchse 1 ist vorzugsweise ein Teil eines Gehäuses 3, das lediglich schematisch dargestellt ist, oder die Lagerbuchse ist an einem Gehäuseteil anbringbar. Die Drehwelle 2 ist innen mit einem Zapfen 4 versehen, auf dem eine Zahnscheibe 5 dadurch verdrehbar und axial verschiebbar angeordnet ist, daß der Zapfen 4 eine schiefe Ebene in Form eines vorzugsweise mehrgängigen steilgewindes 6 aufweist und die Lagerbohrung 7 der Zahnscheibe 5 eine hierfür geeignete Auflagefläche z. B. in Form eines entsprechenden Innengewindes oder eines oder mehrerer nach innen ragender Stifte 8 (Fig. 2) aufweist.

Die Zahnscheibe 5 besitzt eine Zahnung 9, die beim Ausführungsbeispiel an der Stirnfläche der Zahnscheibe 5 vorgesehen ist. In deren Wirkungsbereich ist ein Kontaktpaar 101, 102 vorgesehen, dessen von der Zahnung 9 betätigbares Kontaktstück 102 in jeder axialen Stellung der Zahnscheibe 5 mit der Zahnung 9 in Wirkverbindung steht und ein Drehen der Drehwelle 2 von den Zahnspitzen gegen das Gegenkontaktstück 101 gedrückt werden kann. Jeder Zahn der Zahnung 9 bewirkt daher eine Kontaktgabe und damit die Ausgabe eines Impulses, und zwar jeweils in einem der Zahnung 9 entsprechenden Drehwinkel.

Der freien Scheibenfläche 10 der Zahnscheibe 5 oder einem auf dieser angeordneten ringförmigen Ansatz 11 gegenüber ist ein zweites Kontaktpaar 201, 202 angebracht. Das bewegliche Kontaktstück 202 kann von der Scheibenfläche 10 bzw. dem ringförmigen Ansatz 11 bei nach axial außen geschobener Zahnscheibe 5 axial gegen das Gegenkontaktstück 201 gedrückt und der Kontakt geschlossen werden. Da die Zahnscheibe 5 je nach Drehrichtung der Drehwelle 2 infolge der Rastwirkung des Kontaktstücke 102 mit der Zahnung 9 über das Steilgewinde 6 in der Zeichnung nach oben oder unten geschoben wird, wird der Kontakt 201, 202 geschlossen oder geöffnet. Dieser gibt daher nur einen Impuls ab oder eine dauernde Spannung, wenn die Kontakte 201, 202 geschlossen sind. Dieses Kontaktpaar 201, 202 dient also zur Drehrichtungserkennung. Erst wenn die axiale Verschiebung der Zahnscheibe 5 erfolgt ist oder je nach Drehrichtung hätte erfolgen können, wird die Rast der Zahnscheibe 5 überwunden und diese um einen oder mehrere Zähne weitergedreht, wobei das Kontaktpaar 101, 102 eine entsprechende Zahl von Impulsen abgibt. Die Zahnscheibe 5 ist dabei zwischen zwei durch als Scheiben 12, 13 ausgebildete Endanschlagelemente definierte Endlagen axial verstellbar und nach Anschlag an einem derselben praktisch mit der Drehwelle 2 starr gekuppelt und daher mit dieser verdrehbar.

Die Kontakte 101, 102 ; 201, 202 sind in an sich bekannter Weise an Blattfedern 14 angeordnet, die im Gehäuse 3 gehaltert und mit Stromzuführungen versehen sind.

Anstelle der axial auslenkbar angeordneten Drehrichtungs-Erkennungskontakte 201, 202 können diese auch radial auslenkbar angeordnet sein. Ein solches Kontaktpaar 211, 212 ist dann so angebracht, daß das betätigbare Kontaktstück 212 so nahe an der Zahnung 9 vorgesehen ist, daß es in deren Wirkungsbereich liegt. Das Kontaktpaar 211, 212 ist jedoch axial so angeordnet, daß es nur in der einen axialen Endstellung, z. B. in der Zeichnung in der unteren gestrichelt gezeichneten Stellung, mit der Zahnung 9 zusammenwirken kann, nicht jedoch in der oberen Endstellung.

Mit der Erfindung ist es also mit einfachen Mitteln möglich, durch eine Drehbewegung an der Drehwelle 2 eine Drehrichtungserkennung und eine Impulsabgabe zu realisieren.

## Patentansprüche

1. Impulsgenerator mit einer über eine Drehwelle (2) antreibbaren Zahnscheibe (5), die zwei Kontaktpaare (101, 102 ; 201, 202 ; 211, 212) zur Impulserzeugung und zur Erkennung der Links- oder Rechtsdrehung der Drehwelle (2) betätigen kann, dadurch gekennzeichnet, daß die Zahnscheibe (5) sowohl drehbar als auch axial verschiebbar angeordnet ist, indem die Zahnscheibe (5) über eine durch die Drehwelle (2) drehbare und an Auflageelementen (8) der Zahnscheibe (5) anliegende schiefe Ebene (6) je nach Drehrichtung axial verschiebbar ist, daß ein Kontaktpaar (201, 202 ; 211, 212) zur Drehrichtungserkennung über die Zahnscheibe (5) in einer axialen Stellung der Zahnscheibe (5) betätigbar ist, daß das andere Kontaktpaar (101, 102) zur Impulserzeugung unabhängig von der axialen Stellung der Zahnscheibe (5) in Abhängigkeit vom Drehwinkel der Drehwelle (2) über die Zahnung (9) betätigbar ist, und daß die Zahnscheibe (5) zugleich als Rastscheibe ausgebildet ist und die Rastwirkung derart bemessen ist, daß die Zahnscheibe (5) zunächst über die schiefe Ebene (6) axial verschiebbar und erst nach Erreichen eines Verschiebeanschlages (12, 13) durch Überwindung der Rastwirkung verdrehbar ist.

2. Impulsgenerator nach Anspruch 1, dadurch gekennzeichnet, daß in an sich bekannter Weise ein Kontaktstück (202) des einen Kontaktpaares (201, 202) durch axiale Verschiebung der Zahnscheibe (5) in Schließ- bzw. Öffnungsstellung bewegbar ist.

3. Impulsgenerator nach Anspruch 1 oder 2, dadurch gekennzeichnet, daß wenigstens je ein Kontaktstück (102 ; 212) des anderen Kontaktpaares (101, 102) sowie wenigstens eines weiteren Kontaktpaares (211, 212) radial auslenkbar ist.

4. Impulsgenerator nach Anspruch 3, dadurch gekennzeichnet, daß je ein auslenkbares Kontaktstück (102, 212) durch die Zahnung der Zahnscheibe (5) auslenkbar ist.

5. Impulsgenerator nach einem der Ansprüche 1 bis 4, dadurch gekennzeichnet, daß die schiefe Ebene in an sich bekannter Weise als Steilgewinde ausgebildet ist und dieses in der Zahnscheibe (5) und auf einem auf der Drehwelle (2) vorhandenen Zapfen (4) angeordnet ist.

6. Impulsgenerator nach Anspruch 5, dadurch gekennzeichnet, daß ein mehrgängiges Steilgewinde vorgesehen ist.

7. Impulsgenerator nach einem der Ansprüche 1 bis 6, dadurch gekennzeichnet, daß auf der Drehwelle (2) im Abstand des axialen Hubes der Zahnscheibe (5) zwei Endanschlagelemente (12, 13) vorgesehen sind, zwischen denen die Zahnscheibe (5) axial verschiebbar ist.

## Claims

1. Pulse generator comprising a toothed disc (5) which is capable of being driven via a rotary shaft (2) and of actuating two pairs of contacts (101,102 ; 201,202 ; 211,212) for generating the pulses and for detecting the left or right rotation of the rotary shaft (2), characterized in that the toothed disc (5) is so disposed as to be capable of being rotated as well as of being axially displaced, since the toothed disc (5), via an inclined plane (6) which is rotatable via the rotary shaft (2) and lies against supporting elements (8) of the toothed disc (5), is capable of being displaced in the axial direction depending on the direction of rotation, that one pair of contacts (201, 202 ; 211, 212) for the purpose of detecting the direction of rotation is capable of being actuated in one axial position of the toothed disc (5), that the other pair of contacts (101, 102), for generating the pulses, is capable of being actuated independently of the axial position of the toothed disc (5) depending on the angle of rotation of the rotary shaft (2), via the toothing (9), and that said toothed disc (5) is at the same time designed as an indexing disc and that the indexing effect is so dimensioned that the toothed disc (5) is, in the first place, via the inclined plane (6), capable of being axially displaced, and is only capable of being turned upon reaching a sliding displacement stop (12, 13) by overcoming the indexing effect.

2. A pulse generator as claimed in Claim 1, characterized in that one contact member (202) of said one pair of contacts (201, 202) is capable of being moved into the closing or opening position by axial displacement of the toothed disc (5).

3. A pulse generator as claimed in Claim 1 or 2, characterized in that at least one contact member (102 ; 212) of the other pair of contacts (101, 102) and of at least one further contact pair (211, 212) is capable of being deflected radially.

4. A pulse generator as claimed in Claim 3, characterized in that in each case one deflectable contact member (102, 212) is capable of being deflected by the toothing of the toothed disc (5).

5. A pulse generator as claimed in any one of Claims 1 to 4, characterized in that the inclined plane is constructed, in a manner known per se, as a coarse thread and that this is arranged on said toothed disc and on a journal (4) which is on the rotary shaft (2).

6. A pulse generator as claimed in Claim 5, characterized in that a multiple coarse thread is provided.

7. A pulse generator as claimed in any one of Claims 1 to 6, characterized in that on said rotary shaft (2) there are provided, spaced apart by the axial lift of said toothed disc (5), two limiting stop elements (12, l3) between which said toothed disc (5) is axially displaceable.

**Revendications**

1. Générateur d'impulsions comprenant un disque denté (5) entraîné par un arbre rotatif (2) et actionnant deux paires de contacts (101, 102 ; 201, 202 ; 211, 212) pour engendrer des impulsions et détecter la rotation vers la droite ou vers la gauche de l'arbre rotatif (2), caractérisé en ce que le disque denté (5) est agencé pour être entraîné en rotation et déplacé axialement, du fait que le disque denté (5), par l'intermédiaire d'un plan incliné (6) entraîné en rotation par l'arbre rotatif (2) et appliqué contre des éléments de support (8) du disque denté (5), peut être déplacé en direction axiale, en fonction du sens de rotation, en ce qu'une paire de contacts (201, 202 ; 211, 212) de détection du sens de rotation via le disque denté (5) est actionné dans une position axiale du disque denté (5), en ce qu'une autre paire de contacts (101, 102) produisant des impulsions est actionnée par la denture (9) indépendamment de la position axiale du disque denté (5), en fonction de l'angle de rotation de l'arbre rotatif (2), et en ce que le disque denté (5) est conçu comme un disque indexé, l'effet d'indexation étant dimensionné de façon que le disque denté (5) soit d'abord déplacé axialement, par l'intermédiaire du plan incliné (6), et soit entraîné en rotation seulement après qu'ait été atteinte une butée de déplacement (12, 13), en surmontant l'effet d'indexation.

2. Générateur d'impulsions conforme à la revendication 1, caractérisé en ce que d'une manière connue en elle-même, une pièce de contact (202) d'une paire de contacts (201, 202) est déplacé par un mouvement axial du disque denté (5), dans une position de fermeture ou d'ouverture de contact.

3. Générateur d'impulsions conforme à la revendication 1 ou 2, caractérisé en ce qu'au moins une des pièces de contact (102 ; 212) de l'autre paire de contacts (101, 102), ainsi que d'au moins une paire de contacts additionnelle (211, 212) est mobile radialement.

4. Générateur d'impulsions conforme à la revendication 3, caractérisé en ce que chaque pièce de contact mobile (102, 212) est déplacée par les dents du disque denté (5).

5. Générateur d'impulsions selon l'une quelconque des revendications 1 à 4, caractérisé en ce que le plan incliné est, de manière connue en elle-même, un filet à forte inclinaison agencé sur une portée (4) de l'arbre rotatif (2) et inséré dans le disque denté (5).

6. Générateur d'impulsions selon la revendication 5, caractérisé en ce qu'il est prévu un filetage à plusieurs filets.

7. Générateur d'impulsions selon l'une quelconque des revendications 1 à 6, caractérisé en ce que, sur l'arbre rotatif (2), à une distance égale au mouvement axial du disque denté (5) deux éléments de butée (12, 13) sont prévus, entre lesquels peut se déplacer axialement le disque denté (5).

0 144 708

Fig. 1

Fig. 2